# EUROPÄISCHE PATENTSCHRIFT

(11) **EP 2 019 386 B1**
(45) Veröffentlichungstag und Bekanntmachung des Hinweises auf die Patenterteilung: **21.03.2012**
(21) Anmeldenummer: 07014558.6
(22) Anmeldetag: 25.07.2007
(51) Int. Cl.: G09F 9/00, G05D 23/00, F24H 9/20

(54) **Anzeige eines elektrischen Gerätes**
Display of an electronic device
Affichage d'un appareil électronique

(43) Veröffentlichungstag der Anmeldung: 28.01.2009
(73) Patentinhaber: ROBERT BOSCH GMBH, 70442 Stuttgart (DE)
(72) Erfinder: Schäfer, Frank, 35043 Marburg (DE)

(56) Entgegenhaltungen:
- WO-A-2007/031366
- DE-A1- 3 437 130
- DE-A1- 19 729 575
- DE-A1-102004 032 618
- DE-B3- 10 312 373

## Beschreibung

Die Erfindung betrifft eine Anzeige eines elektrischen Gerätes, insbesondere einer Regelung für eine Heizungsanlage, nach dem Oberbegriff des Patentanspruches 1.

Üblicherweise ist an das einem Heizgerät direkt zugeordnete Regelgerät bei einer Heizungsanlage ein Fernbedienungsgerät, eine Schaltuhr und/oder ein Raumthermostat angeschlossen, um den Nutzern eines Gebäudes die Bedienung der Heizungsanlage von einem Wohnraum aus zu ermöglichen. Für einen vollautomatischen Betrieb von bekannten Heizungsanlagen sind außerdem diverse Messwerte erforderlich, nach denen die erzeugte Wärmeleistung und/oder die in die Räume eingebrachte Wärmeenergie geregelt wird. Neben der Außentemperatur gehört dazu auch die Raumtemperatur, denn diese ist maßgebend für die Rückmeldung zur Regelung der Heizungsanlage, insbesondere in Bezug auf die tatsächlichen Verhältnisse gegenüber den vom Nutzer eingestellten Sollwerten für einen Raum bzw. für die gesamte Nutzungseinheit.

Heizungsanlagen werden gemäß einem Schaltuhrprogramm nach Temperatur-, Uhrzeit-, Tages-, Wochen-, Monats- und/oder Jahresangaben geregelt. Zum Energiesparen erfolgt häufig eine phasenweise Abschaltung oder Absenkung, also ein Betrieb mit niedrigerer Raumtemperatur. Ein Beispiel dafür ist die sogenannte Nachtabsenkung, wobei vom Anlagennutzer ein Raumtemperatursollwert sowie ein Absenkzeitraum vorgegeben, und von der Schaltuhr bzw. der Heizungsregelung eingehalten werden.

Da sich das Fernbedienungsgerät, die Schaltuhr und/oder ein Raumthermostat in einem Raum in der Regel an einer vom zentralen Regelgerät entfernten Position befinden, kennt man einerseits die Kommunikation mit dem Regelgerät über eine Zweidrahtleitung und andererseits die Signalübertragung per Funk. Dies hat den Vorteil, dass die Leitungsverbindung entfällt. Gleichzeitig wird dabei auch aus praktischen Gründen vermieden, die Bedieneinrichtung im Raum an das Stromnetz anzuschließen. Eine eigene Stromversorgung mit mindestens einer Batterie ist daher üblich, kann aber wegen der begrenzten BatterieLebensdauer möglicherweise zu einem erhöhten Aufwand für den Nutzer der Heizungsanlage führen.

Stromsparverfahren, wie zum Beispiel das aus der Mikroprozessortechnik bekannte wartezeitabhängige Umschalten einer ganzen elektronischen Baugruppe in einen Stromsparmodus, lassen sich nicht auf die Heizungstechnik übertragen. Begründet ist dies im Wesentlichen damit, dass die Hauptfunktion eines Raumthermostaten, nämlich die Erfassung, Anzeige und Weiterleitung eines Raumtemperatur-Wertes an die Heizungsregelung, immer gewährleistet sein muss. Weil sich die Anzeige des Betriebszustands meistens in einem Nutzraum befindet, ist es zudem generell wichtig, dass diese für den Nutzer sehr eindeutig ist. Dadurch werden Unsicherheiten oder Fehlinterpretationen beim Nutzer, die möglicherweise nicht nötige Servicefälle nach sich ziehen, vermieden.

Aus der DE 197 29 575 A1 ist weiterhin ein Raumtemperaturregler mit drahtloser Signalübertragung bekannt, der im Hinblick auf einen geringen Energieverbrauch den Temperaturregelkreis nur in zeitlichen Abständen aktiviert. Der Widerstand des Raumtemperaturreglers wird dabei generell bei Batteriebetrieb in größeren zeitlichen Abständen gemessen und auch in entsprechend größeren zeitlichen Abständen weiter gesendet als bei Solarzellenbetrieb. Durch diese Festlegung der Zeitabstände zwischen einzelnen Auswertungen ergeben sich aber möglicherweise Regelungenauigkeiten und somit Komforteinbußen im gesamten Nutzungszeitraum der Regelung.

Die WO 2007/031366 A1 zeigt ein Anzeigesystem, insbesondere für eine industrielle Automatisierungseinrichtung, mit einem ersten elektrisch betreibbaren Anzeigefeld, welches zumindest teilweise und/oder zeitweise transparent ist. Zusätzlich besteht das Anzeigesystem aus einem zweiten Anzeigefeld, welches durch das erste Anzeigefeld hindurch betrachtbar ist.

Der Erfindung liegt daher die Aufgabe zu Grunde, ein elektrisches Gerät, insbesondere eine Regelung für eine Heizungsanlage, zu optimieren, um den Stromverbrauch in einem batteriebetriebenen Fernbedienungsgerät, einer Schaltuhr und/oder einem Raumthermostaten zu reduzieren.

Erfindungsgemäß wurde dies mit den Merkmalen des Patentanspruches 1 gelöst. Vorteilhafte Weiterbildungen sind den Unteransprüchen zu entnehmen.

Die Anzeige eines elektrischen Gerätes ist dadurch gekennzeichnet, dass das Display als Anzeigevorrichtung mit einem Aufdruck versehen ist, welcher bei ausgeschaltetem Display sichtbar ist und bei aktiviertem Display durch zugeordnete, hinterlegte Anzeigen, zum Beispiel mit schwarzen oder farbigen Pixeln oder Segmenten, unsichtbar wird. Dabei weist der Aufdruck auf dem Display auf eine Aktivität des Gerätes im Hintergrund hin. In einer bevorzugten Ausführungsform ist der Aufdruck auf dem Display mit einem Stromspar-Betriebszustand verknüpft, wobei der Aufdruck bei ausgeschaltetem Display sichtbar ist und im Normalbetrieb mit aktiviertem Display unsichtbar ist.

Generell, egal in welchem Betriebszustand, wird durch das Drücken einer Taste am Gerät oder das Detektieren einer Bewegung im Raum an einem Fernbedienungsgerät, einer Schaltuhr und/oder einem Raumthermostat der Stromspar-Betriebszustand beendet und es erfolgt zumindest zeitweise eine Rückkehr in den Normalbetrieb mit der vollen Anzeige. Erfindungsgemäß steht ein einfaches Verfahren zur Verfügung, um den Stromverbrauch in einem elektrischen Gerät, insbesondere einer Regelung für eine Heizungsanlage mit einem batteriebetriebenen Fernbedienungsgerät, einer Schaltuhr und/oder einem Raumthermostaten zu reduzieren. Die Batterielebensdauer wird durch Abschalten der Anzeige deutlich verlängert, da die Aktivität des Displays, als eines der maßgeblichen Bauteile mit einem relativ hohen Stromverbrauch, reduziert wird. Trotzdem sind die volle Anzeige sowie alle in der Heizungsregelung integrierten Regel- und Komfortfunktionen für einen Raumnutzer immer verfügbar. Das erfindungsgemäße Verfahren kann ebenfalls zum Senken des Energieverbrauchs bei Geräten eingesetzt werden, die am Stromnetz betrieben werden.

## Patentansprüche

1. Anzeige einer Regelung für eine Heizungsanlage, mit einem dem Heizgerät direkt zugeordneten Regelgerät sowie mindestens einem Fernbedienungsgerät, einer Schaltuhr und/oder einem Raumthermostaten in einem zu beheizenden Raum, insbesondere an einer vom Regelgerät entfernten Position, einer Signalübertragung per Funk zur Kommunikation mit dem Regelgerät, einem Display als Anzeigevorrichtung für Betriebswerte und mit einer eigenen Stromversorgung mit Batterien,
**dadurch gekennzeichnet, dass** das Display als Anzeigevorrichtung mit einem Aufdruck versehen ist, welcher auf dem Display auf eine Aktivität des Gerätes im Hintergrund hinweist, bei ausgeschaltetem Display sichtbar ist und bei aktiviertem Display durch zugeordnete Anzeigen unsichtbar wird, und dass der Aufdruck auf dem Display mit einem Stromspar-Betriebszustand verknüpft ist, wobei der Aufdruck bei ausgeschaltetem Display sichtbar ist und im Normalbetrieb mit aktiviertem Display unsichtbar ist.

2. Verfahren zur Verwendung der Anzeige nach Anspruch 1,
**dadurch gekennzeichnet, dass** durch das Drücken einer Taste am Gerät oder das Detektieren einer Bewegung im Raum an einem Fernbedienungsgerät, einer Schaltuhr und/oder einem Raumthermostat der Stromspar-Betriebszustand beendet wird und eine Rückkehr in den Normalbetrieb erfolgt.

## Claims

1. A display of a control system for a heating system comprising a regulator associated directly with the heater as well as at least one remote control device, a time switch and/or a room thermostat in a room to be heated, in particular at a position remote from the regulator, a signal transmission by radio for communication with the regulator, a display as a display device for operating values and having its own power supply with batteries, **characterised in that** the display as a display device is provided with an overprint which indicates on the display an activity of the device in the background, which is visible when the display is switched off and which becomes invisible when the display is activated by associated displays and that the overprint on the display is linked to a power-saving operating state, wherein the overprint is visible when the display is switched off and is invisible in normal operation with activated display.

2. The method for using the display according to claim 1, **characterised in that** by pressing a button on the device or the detection of a movement in the room on a remote control device, a time switch and/or a room thermostat, the power saving operating state is ended and a return to normal operation is accomplished.

## Revendications

1. Affichage d'un réglage pour une installation de chauffage, comprenant un appareil de réglage associé directement à l'appareil de chauffage et au moins un appareil de télécommande, une minuterie et/ou un thermostat d'ambiance dans un local à chauffer, en particulier sur une position éloignée de l'appareil de réglage, une transmission de signal par radio pour la communication avec l'appareil de réglage, un écran comme dispositif d'affichage pour des valeurs de service et une alimentation électrique propre avec des piles,
**caractérisé en ce que** l'écran est doté comme dispositif d'affichage d'une surimpression qui indique à l'écran une activité de l'appareil en arrière-plan, est visible lorsque l'écran est déconnecté et devient invisible par des affichages associés lorsque l'écran est activé, et **en ce que** la surimpression à l'écran est combiné avec un état de service d'économie de courant, la surimpression étant visible lorsque l'écran est déconnecté et devient invisible en mode normal avec l'écran activé.

2. Procédé pour utiliser l'affichage selon la revendication 1,
**caractérisé en ce que** l'état de service d'économie de courant est achevé par l'enfoncement d'une touche sur l'appareil ou la détection d'un déplacement dans le local sur un appareil de télécommande, une minuterie et/ou un thermostat d'ambiance et l'on a un retour au mode normal.
